# EUROPÄISCHE PATENTANMELDUNG

(11) **EP 1 659 020 A1**
(43) Veröffentlichungstag der Anmeldung: **24.05.2006**
(21) Anmeldenummer: 05022303.1
(22) Anmeldetag: 13.10.2005
(51) Int. Cl.: B60N 2/02, H01H 25/00

(54) **Sitzverstellschalter mit zumindest einem drehbaren Betätigungselement**

(30) Priorität: 20.11.2004 DE 102004056077
(71) Anmelder: Delphi Technologies, Inc., Troy, Michigan 48007 (US)
(72) Erfinder: Schneiss, Rüdiger, 55629 Seesbach (DE); Freitag, Klaus, 55545 Bad Kreuznach (DE)
(74) Vertreter: Becker, Bernd

(57) **Zusammenfassung**

Ein Sitzverstellschalter umfasst zumindest ein drehbares Betätigungselement (1,6), das einem Fahrzeugsitz (5) mit einer Sitzfläche (4) und einer über ein Gelenk (2) daran angeordneten Rückenlehne (3) zugeordnet ist. Das Betätigungselement (1,6) ist im Bereich des Gelenks (2) auf der Außenseite des Fahrzeugsitzes (5) angeordnet, oder in Bereich einer vorderen aüßeren Ecke des Fahrzeugsitzes (5) angeordnet.

## Beschreibung

Die Erfindung bezieht sich auf einen Sitzverstellschalter mit zumindest einem drehbaren Betätigungselement, das einem Fahrzeugsitz mit einer Sitzfläche und einer über ein Gelenk daran angeordneten Rückenlehne zugeordnet ist.

Insbesondere Kraftfahrzeuge werden in zunehmendem Maß mit verstellbaren Kraftfahrzeugsitzen ausgestattet, die eine Anpassung an den Körper eines Fahrzeugbenutzers zur ermüdungsfreien Fahrt ermöglichen. Ursprünglich war lediglich eine Längsverstellung des Kraftfahrzeugsitzes und eine Neigungsverstellung der Rückenlehne mittels entsprechender mechanischer Einrichtungen vorgesehen, wobei zur Neigungsverstellung der Rückenlehne im Bereich eines die Sitzfläche mit der Rückenlehne verbindenden Gelenks ein drehbar zu beaufschlagender Stellknopf vorhanden ist. Bei neueren Entwicklungen von Kraftfahrzeugsitzen werden neben den vorgenannten Verstellmöglichkeiten auch Änderungen der Sitzhöhe, der Einstellungen der Kopfstütze sowie der Lendenstütze mittels Stellmotoren ermöglicht. Zur Ansteuerung der unterschiedlichen Stellmotoren ist eine entsprechende Anzahl elektrischer Schalter notwendig, die zu sogenannten Sitzverstellschaltern zusammengefasst sind.

Die EP 1 178 897 B1 offenbart eine Steuervorrichtung zur Steuerung von Stellmotoren für die Verstellung verschiedener Sitzteile eines Sitzes mit mindestens zwei Schaltern für die vorzunehmenden Verstellbewegungen des Sitzes, wobei der eine Schalter als Auswahlschalter für unterschiedliche Schaltmenüs der Einstellbereiche der Sitzteile und der andere Schalter als Multifunktionsschalter für die Verstellbewegungen des jeweiligen Einstellbereiches des Sitzteils ausgebildet ist. Der Multifunktionsschalter ist ein kreuzweise beaufschlagbarer Schiebe-Drehschalter, dem in jedem Schaltmenü horizontale und/oder vertikale Verstellbewegungen sowie Neigungsverstellbewegungen für den ausgewählten Einstellbereich des Sitzteils zugeordnet sind. Bei dieser Steuervorrichtung ist es insoweit problematisch, als der Fahrzeugführer zunächst den Auswahlschalter betätigen muss und die Verstellbewegungen der jeweiligen Einstellbereiche des Sitzteils durch eine Beaufschlagung des Multifunktionsschalters vornimmt. Da diese Steuervorrichtung in der Regel im äußeren seitlichen Bereich der Sitzfläche des Kraftfahrzeugsitzes angeordnet ist, muss der Fahrzeugführer die einzelnen Schalter ertasten, wodurch er vom Verkehrsgeschehen abgelenkt ist.

Des Weiteren ist aus der WO 97/04985 A eine Steuervorrichtung mit einer Steuereinheit zur Steuerung von Stellmotoren für die Verstellung verschiedener Sitzteile eines Kraftfahrzeugsitzes bekannt. Die in der Näher eines Lenkrades des Kraftfahrzeuges angeordnete Steuereinheit umfasst mehrere als Dreh-, Schiebe- oder Drucktastenschalter ausgebildete Einzelschalter, von denen ein erster Einzelschalter zur Aktivierung einer gespeicherten Position der Sitzteile dient. Mit einem zweiten als Auswahlschalter ausgestalteten Einzelschalter werden die zugeordneten Stellmotoren selektiv aktiviert, die mittels weiterer Einzelschalter angesteuert werden. Um die mit den Einzelschaltern angesteuerten Verstellbewegungen visuell darzustellen, ist der Steuereinheit ein Bildschirm mit sinnfälligen Piktogrammen zugeordnet. Die Steuereinheit weist einen aufwändigen und damit teuren Aufbau auf.

Der Erfindung liegt die Aufgabe zugrunde, einen Sitzverstellschalter der eingangs genannten Art zu schaffen, dessen Betätigungselement derart an einem Fahrzeugsitz platziert ist, dass ein Fahrzeugführer die mit dem Betätigungselement vorzunehmenden Einstellungen des Sitzes intuitiv erfasst, wobei der Sitzverstellschalter einen einfachen und kostengünstigen Aufbau aufweist.

Erfindungsgemäß wird die Aufgabe dadurch gelöst, dass das Betätigungselement im Bereich des Gelenks auf der Außenseite des Fahrzeugsitzes angeordnet ist.

Im Bereich des Gelenks zwischen der Sitzfläche und der Rückenlehne ist üblicherweise ein mechanisches Verstellrad zur Neigungseinstellung der Rückenlehne angeordnet, weshalb Fahrzeugführer in der Regel an dieser Stelle nach einem Betätigungselement suchen, mit dem sie die Neigung der Rückenlehne einstellen können. Durch die Anordnung des Betätigungselementes des elektrischen Sitzverstellschalters an dieser Stelle erfasst der Fahrer intuitiv die Möglichkeit Einstellungen der Rückenlehne vornehmen zu können, weshalb sowohl die Bedienung des Sitzverstellschalters erleichtert als auch die Verkehrssicherheit erhöht ist, da der Fahrer nicht durch tastendes Suchen oder die Beaufschlagung mehrerer einzelner Schalter vom Verkehrsgeschehen abgelenkt ist.

Zweckmäßigerweise dient das Betätigungselement zur Ansteuerung der Sitzlehne zugeordneter Einstellfunktionen. Vorzugsweise ist eine Drehachse des Betätigungselementes koaxial zu einer Gelenkachse ausgerichtet. Um mit dem Betätigungselement eine Vielzahl von Einstellfunktionen der Sitzlehne ausführen zu können, ist das Betätigungselement vorteilhafterweise kreuzweise verschiebbar gelagert. Zur Erhöhung des Bedienkomforts des Sitzverstellschalters ist in Ausgestaltung das Betätigungselement getastet zu beaufschlagen.

Nach einer Weiterbildung erfolgt bei einer Drehbewegung des Betätigungselementes aus einer Neutralstellung in die eine oder andere Richtung eine sinnfällig zugeordnete Neigungsverstellung der Rückenlehne. Verdreht ein Benutzer des Fahrzeugsitzes das Betätigungselement in Richtung zur Fahrzeugfront, wird die Rückenlehne nach vorne und bei einer Drehbewegung in Richtung des Fahrzeughecks nach hinten geneigt. In weiterer Ausgestalturig erfolgt bei einer vertikalen Verschiebung des Betätigungselementes aus der Neutralstellung in die eine oder andere Richtung eine dementsprechende Höhenverstellung einer Kopfstütze. Zweckmäßigerweise bewirkt eine horizontale Verschiebung des Betätigungselementes aus der Neutralstellung in die eine oder andere Richtung eine sinnfällig zugeordnete Verstellung einer Lendenstütze. Damit sind über das Betätigungselement die wesentlichen Einstellungen im Bereich der Rückenlehne vorzunehmen.

Um weitere Einstellungen im Bereich der Rückenlehne vornehmen zu können, ist vorteilhafterweise das Betätigungselement ringförmig ausgestaltet und nimmt in seinem Zentrum einen Wippentaster auf. Zweckmäßigerweise ist der Wippentaster kreuzweise beaufschlagbar. Mittels des Wippentasters lassen sich zum einen Einstellungen der Lendenstütze und zum anderen Breitenverstellungen der Rückenlehne vornehmen.

Im Weiteren wird die Aufgabe erfindungsgemäß auch dadurch gelöst, dass das Betätigungselement im Bereich einer vorderen äußeren Ecke des Fahrzeugsitzes angeordnet ist.

Aufgrund der Platzierung des Betätigungselementes ist seine Funktion für den Benutzer des Fahrzeugsitzes ebenfalls leicht intuitiv erfassbar. Zur Vornahme bestimmter Einstellungen greift der Benutzer des Fahrzeugsitzes nämlich in diesen Bereich, um tastend ein Betätigungselement zu suchen.

Bevorzugt dient das Betätigungselement zur Ansteuerung von dem Fahrzeugsitz und/oder der Sitzfläche zugeordneten Verstellfunktionen.

Zweckmäßigerweise ist das Betätigungselement kreuzweise verschiebbar gelagert. Bevorzugt ist das Betätigungselement ringförmig ausgestaltet und weist in seinem Zentrum eine Taste auf. Damit können mittels des Betätigungselementes eine Vielzahl von dem Fahrzeugsitz und/oder der Sitzfläche zugeordneten Verstellfunktionen realisiert werden, wobei das Betätigungselement einen kompakten Aufbau aufweist, wodurch die Herstell- und Lagerhaltungskosten reduziert werden.

Vorzugsweise erfolgt durch eine getastete Verdrehung des Betätigungselementes aus seiner Neutralstellung in die eine oder andere Richtung eine sinnfällige Neigungsverstellung der Sitzfläche. Nach einer Weiterbildung bewirkt eine horizontale getastete Verschiebung des Betätigungselementes aus einer Neutralstellung in die eine oder andere Richtung eine dementsprechende Verstellbewegung des gesamten Fahrzeugsitzes. Vorteilhafterweise bewirkt eine vertikale getastete Verschiebung des Betätigungselementes aus einer Neutralstellung in die eine oder die andere Richtung eine korrespondierende Höhenverstellung des Fahrzeugsitzes. In Ausgestaltung erfolgt bei einer getasteten Beaufschlagung der Wipptaste aus der Neutralstellung in die eine oder andere Richtung eine entsprechende Verstellung der Tiefe der Sitzfläche.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

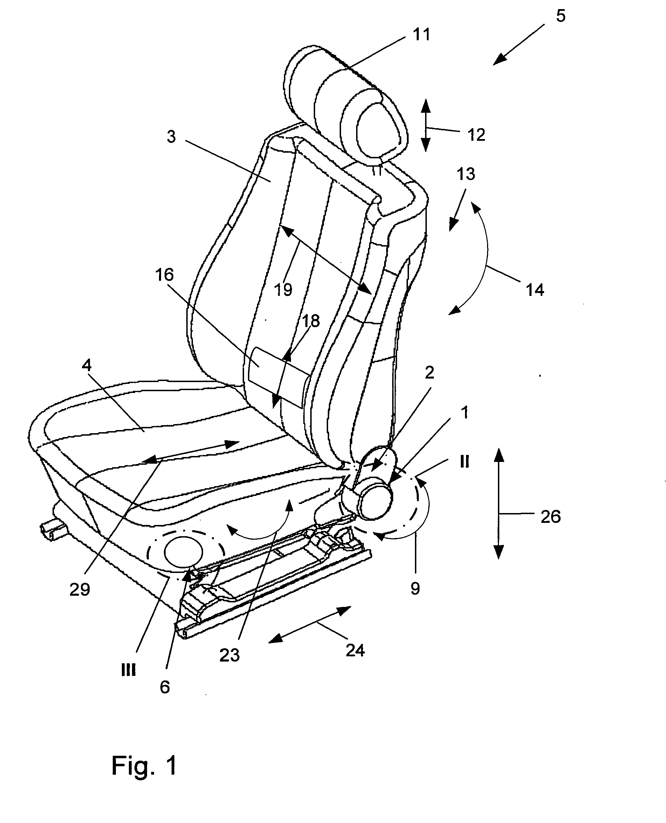

- Fig. 1: eine perspektivische Darstellung eines Fahrzeugsitzes, dessen Sitzteile mittels des erfindungsgemäßen Sitzverstellschalters verstellbar sind,

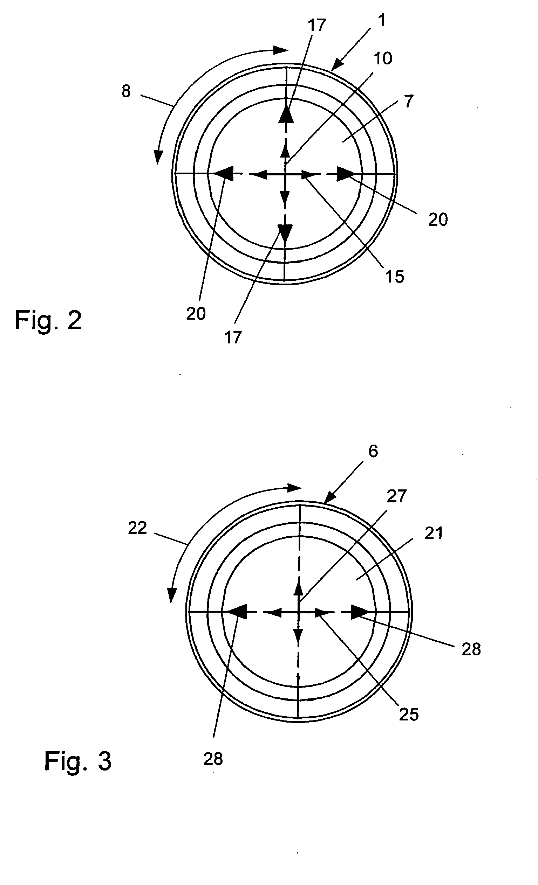

- Fig. 2: eine vergrößerte Darstellung der Einzelheit II nach Fig. 1 und
- Fig. 3: eine vergrößerte Darstellung der Einzelheit III nach Fig. 1.
Der zur Ansteuerung von Stellmotoren eine Vielzahl von Einzelschaltern aufweisende Sitzverstellschalter umfasst im wesentlichen ein Betätigungselement 1, das im Bereich eines Gelenks 2, über das eine Rückenlehne 3 mit einer Sitzfläche 4 verbunden ist, auf der Außenseite eines Fahrzeugsitzes 5 angeordnet ist. Des Weiteren ist ein im Bereich einer vorderen äußeren Ecke des Fahrzeugsitzes 5 platziertes Betätigungselement 6 eines Sitzverstellschalters vorgesehen.

Das drehbar sowie kreuzweise verschiebbar zu beaufschlagende runde Betätigungselement 1 ist mit seiner Drehachse koaxial zu einer Gelenkachse ausgerichtet und dient zur Ansteuerung von der Rückenlehne 3 zugeordneten Einstellfunktionen, wobei das Betätigungselement 1 zur Ansteuerung einer Vielzahl von Einstellfunktionen ringförmig ausgestaltet ist und in seinem Zentrum einen kreuzweise beaufschlagbaren Wippentaster 7 aufnimmt. Bei einer getasteten Drehbewegung des Betätigungselementes 1 aus einer Neutralstellung in die eine oder andere Richtung gemäß Doppelpfeil 8 erfolgt eine sinnfällig zugeordnete Neigungsverstellung gem. Doppelpfeil 9 der Rückenlehne 3. Nach dem Loslassen des Betätigungselementes 1 kehrt dieses in seine Neutralstellung zurück und die Rückenlehne 3 verharrt in ihrer aktuellen Position. Durch eine ebenfalls getastete vertikale Verschiebung des Betätigungselementes 1 aus der Neutralstellung in die eine oder andere Richtung gem. Doppelpfeil 10 werden Stellmotoren einer in der Rückenlehne 3 gelagerten Kopfstütze 11 zu deren der Beaufschlagungsrichtung des Betätigungsrichtung 1 entsprechender Höhenverstellung nach dem Doppelpfeil 12 vorgenommen. Um einen Kopfbereich 13 der Rückenlehne 3 entsprechend dem Doppelpfeil 14 zu verschwenken, wird das Betätigungselement 13 getastet horizontal aus seiner Neutralstellung in die eine oder andere Richtung nach Doppelpfeil 15 verschoben. Eine in die Rückenlehne 3 integrierte Lendenstütze 16 wird durch eine Betätigung des Wippentasters 7 entsprechend den Pfeilen 17 gem. dem Doppelpfeil 18 eingestellt. Zur Verstellung der Breite der Rückenlehne 3 entsprechend dem Doppelpfeil 19 wird der Wippentaster 7 in Richtung der Pfeile 20 getastet beaufschlagt.

Das zur Ansteuerung der dem Fahrzeugsitz 5 bzw. der Sitzfläche 4 zugeordneten Stellfunktionen dienende Betätigungselement 6 ist ebenfalls kreuzweise getastet verschiebbar gelagert sowie ringförmig ausgestaltet und nimmt in seinem Zentrum eine Wipptaste 21 auf. Bei einer getasteten Verdrehung des Betätigungselementes 6 aus seiner Neutralstellung in die eine oder andere Richtung gem. Doppelpfeil 22 wird über entsprechende Schalter mit zugeordneten Stellmotoren die Neigung der Sitzfläche 4 gem. Doppelpfeil 23 sinnfällig vorgenommen. Um eine vertikale Verstellbewegung des gesamten Fahrzeugsitzes 5 entsprechend dem Doppelpfeil 24 zu erzielen, wird das Betätigungselement 6 aus seiner Neutralstellung horizontal in die eine oder andere Richtung gem. dem Doppepfeil 25 verschoben. Um eine Höhenverstellung des gesamten Fahrzeugsitzes 5 nach dem Doppelpfeil 26 zu bewerkstelligen, wird das Betätigungselement 6 aus seiner Neutralstellung vertikal in die eine oder andere Richtung entsprechend dem Doppelpfeil 27 getastet verschoben. Durch eine getastete Beaufschlagung der Wipptaste 21 aus der Neutralstellung in die eine oder andere Richtung gem. den Pfeilen 28 wird eine entsprechende Verstellung der Tiefe der Sitzfläche 4 gem. dem Doppelpfeil 29 vorgenommen.

## Patentansprüche

1. Sitzverstellschalter mit zumindest einem drehbaren Betätigungselement (1), das einem Fahrzeugsitz (5) mit einer Sitzfläche (4) und einer über ein Gelenk (2) daran angeordneten Rückenlehne (3) zugeordnet ist, **dadurch gekennzeichnet, dass** das Betätigungselement (1) im Bereich des Gelenks (2) auf der Außenseite des Fahrzeugsitzes (5) angeordnet ist.

2. Sitzverstellschalter nach Anspruch 1, **dadurch gekennzeichnet, dass** das Betätigungselement (1) zur Ansteuerung der Rückenlehne (3) zugeordneter Einstellfunktionen dient.

3. Sitzverstellschalter nach Anspruch 1 oder 2, **dadurch gekennzeichnet, dass** eine Drehachse des Betätigungselementes (1) koaxial zu einer Gelenkachse ausgerichtet ist.

4. Sitzverstellschalter nach einem der Ansprüche 1 bis 3, **dadurch gekennzeichnet, dass** das Betätigungselement (1) kreuzweise verschiebbar gelagert ist.

5. Sitzverstellschalter nach einem der Ansprüche 1 bis 4, **dadurch gekennzeichnet, dass** das Betätigungselement (1) getastet zu beaufschlagen ist.

6. Sitzverstellschalter nach einem der Ansprüche 1 bis 5, **dadurch gekennzeichnet, dass** bei einer Drehbewegung des Betätigungselementes (1) aus einer Neutralstellung in die eine oder andere Richtung eine sinnfällig zugeordnete Neigungsverstellung der Rückenlehne (3) erfolgt.

7. Sitzverstellschalter nach einem der Ansprüche 4 bis 6, **dadurch gekennzeichnet, dass** bei einer vertikalen Verschiebung des Betätigungselementes (1) aus der Neutralstellung in die eine oder andere Richtung eine dementsprechende Höhenverstellung einer Kopfstütze (11) erfolgt.

8. Sitzverstellschalter nach einem der Ansprüche 4 bis 7, **dadurch gekennzeichnet, dass** eine horizontale Verschiebung des Betätigungselementes (1) aus der Neutralstellung in die eine oder andere Richtung eine sinnfällig zugeordnete Verstellung eines Kopfbereichs (13) der Rückenlehne (3) bewirkt.

9. Sitzverstellschalter nach einem der Ansprüche 1 bis 8, **dadurch gekennzeichnet, dass** das Betätigungselement (1) ringförmig ausgestaltet ist und in seinem Zentrum einen Wippentaster (7) aufnimmt.

10. Sitzverstellschalter nach Anspruch 9, **dadurch gekennzeichnet, dass** der Wippentaster (7) kreuzweise beaufschlagbar ist.

11. Sitzverstellschalter nach dem Oberbegriff des Anspruchs 1, **dadurch gekennzeichnet, dass** das Betätigungselement (6) im Bereich einer vorderen äußeren Ecke des Fahrzeugsitzes (5) angeordnet ist.

12. Sitzverstellschalter nach Anspruch 11, **dadurch gekennzeichnet, dass** das Betätigungselement (6) zur Ansteuerung von dem Fahrzeugsitz (5) und/oder der Sitzfläche (4) zugeordneten Verstellfunktionen dient.

13. Sitzverstellschalter nach Anspruch 11 oder 12, **dadurch gekennzeichnet, dass** das Betätigungselement (6) kreuzweise verschiebbar gelagert ist.

14. Sitzverstellschalter nach einem der Ansprüche 11 bis 13, **dadurch gekennzeichnet, dass** das Betätigungselement (6) ringförmig ausgestaltet ist und in seinem Zentrum eine Wipptaste (21) aufweist.

15. Sitzverstellschalter nach einem der Ansprüche 11 bis 14, **dadurch gekennzeichnet, dass** durch eine getastete Verdrehung des Betätigungselement (6) aus seiner Neutralstellung in die eine oder andere Richtung eine sinnfällige Neigungsverstellung der Sitzfläche (4) erfolgt.

16. Sitzverstellschalter nach einem der Ansprüche 11 bis 15, **dadurch gekennzeichnet, dass** eine horizontale getastete Verschiebung des Betätigungselement (6) aus seiner Neutralstellung in die eine oder andere Richtung eine dementsprechende Verstellbewegung des gesamten Fahrzeugsitzes (5) bewirkt.

17. Sitzverstellschalter nach einem der Ansprüche 11 bis 16, **dadurch gekennzeichnet, dass** eine vertikale getastete Verschiebung des Betätigungselement (6) aus seiner Neutralstellung in die eine oder andere Richtung eine korrespondierende Höhenverstellung des Fahrzeugsitzes (5) bewirkt.

18. Sitzverstellschalter nach einem der Ansprüche 11 bis 17, **dadurch gekennzeichnet, dass** bei einer getasteten Beaufschlagung der Wipptaste (21) aus der Neutralstellung in die eine oder andere Richtung eine entsprechende Verstellung der Tiefe der Sitzfläche (4) erfolgt.
